# EUROPEAN PATENT SPECIFICATION

(11) **EP 4 116 442 B1**
(45) Date of publication and mention of the grant of the patent: **04.06.2025**
(21) Application number: 22181421.3
(22) Date of filing: 28.06.2022
(51) Int. Cl.: C14B 5/00, B32B 9/02, B32B 38/04, B44F 1/06, B60Q 3/14, B60Q 3/20

(54) **LIGHT-TRANSMITTING LEATHER**
LICHTDURCHLÄSSIGES LEDER
MATÉRIAU EN CUIR TRANSMETTANT LA LUMIÈRE

(30) Priority: 08.07.2021 CN 202121551431 U
(43) Date of publication of application: 11.01.2023
(73) Proprietor: Benecke-Changshun Auto Trim (Zhangjiagang) Co., Ltd., Zhangjiagang, Jiangsu 215632 (CN)
(72) Inventor: Gu, Lei, 30165 Hannover (DE); Xu, Longcheng, 30165 Hannover (DE); Liu, Haiyang, 30165 Hannover (DE)
(74) Representative: Preusser, Andrea

(56) References cited:
- EP-A1- 2 218 610
- EP-A1- 2 628 627
- DE-A1- 102007 054 348
- DE-A1- 102008 041 701
- DE-A1- 102012 215 165
- DE-A1- 102018 124 893
- DE-B3- 102008 054 721

## Description

### [Technical Field]

The present invention relates to a light-transmitting leather, which can be used in fields such as motor vehicles and home decoration.

### [Background art]

Leather is widely used as a surface decoration material in various fields such as motor vehicles and home decoration. Common leathers include genuine leathers and artificial leathers. Artificial leathers include polyvinyl chloride (referred to as PVC below) artificial leather, thermoplastic polyolefin elastomer (referred to as TPO below) artificial leather and polyurethane (referred to as PU below) artificial leather, etc., wherein PVC artificial leather is an artificial leather prepared with polyvinyl chloride as the main starting material, TPO artificial leather is an artificial leather prepared with an olefin resin or a mixture of an olefin resin and a rubber elastomer as the main starting material, and PU artificial leather is an artificial leather prepared with a polyurethane resin as the main starting material.

Among materials used for the interior decoration of motor vehicles, the development and use of light-transmitting leather is attracting more and more attention. When such leather is used in cooperation with a light source inside a vehicle, it is possible to achieve an effect whereby the leather surface is an ordinary flat surface when the light is off, but a specific pattern effect is projected when the light is on. This can significantly increase the grade of interior decoration of the motor vehicle. So far, a light-transmitting leather capable of achieving a gradually changing light transmission effect has not yet been developed.

DE 10 2007 054 348 A1 relates to an interior component comprising a composite layer comprising a decorative layer comprising a plurality of openings and a transparent layer, wherein a light source is provided on the side of the decorative layer facing away from the transparent layer, and is characterized in that a light-influencing material is introduced into at least some openings and/or at least some openings only partially pass through the decorative layer.

Therefore, it is desired to design a novel technical solution to solve the technical problem mentioned above.

### [Summary of the invention

The technical problem to be solved by the present invention is to provide a light-transmitting leather which can achieve a gradually changing light transmission effect in cooperation with a light source.

To solve the abovementioned technical problem, the present invention employs the technical solution according to the claims.

Compared with the prior art, the present invention has the following beneficial effects: The distance from the first light transmission hole to the first face is not equal to the distance from the second light transmission hole to the first face; with this configuration, when a light source is positioned at the second face side, the intensities of light rays passing through the first light transmission hole and the second light transmission hole from the light source are different, and it is thereby possible to obtain light rays of two or more different intensities with a single light source, so as to achieve a gradually changing light transmission effect.

### [Brief Description of the Drawings]

Fig. 1 is a schematic drawing of the light-transmitting leather in a preferred embodiment of the present utility model.
Fig. 2 is a schematic drawing of the pattern of the light-transmitting leather shown in Fig. 1.

### [Detailed Description of Embodiments]

The technical solution in embodiments of the present invention is explained and illustrated below with reference to the accompanying drawings of embodiments of the present utility model. However, the embodiments below are merely preferred embodiments, not all embodiments, of the present utility model.

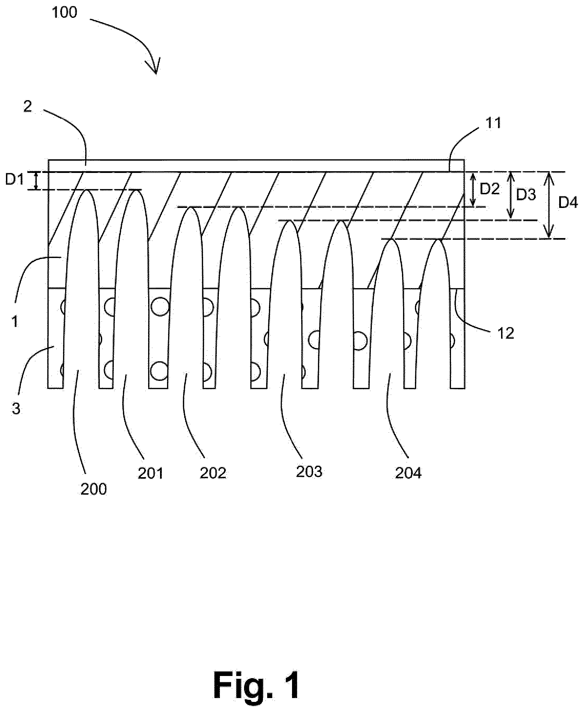

Referring to Fig. 1, the present invention provides a light-transmitting leather 100, which may be used in fields such as motor vehicles and home decoration, and in particular, on components such as door panels and instrument panels in the field of motor vehicles. The light-transmitting leather 100 comprises a skin layer 1, a paint layer 2 and a support layer 3. The skin layer 1 comprises a first face 11 facing the paint layer 2 and a second face 12 facing away from the paint layer 2, wherein the second face 12 faces the support layer 3.

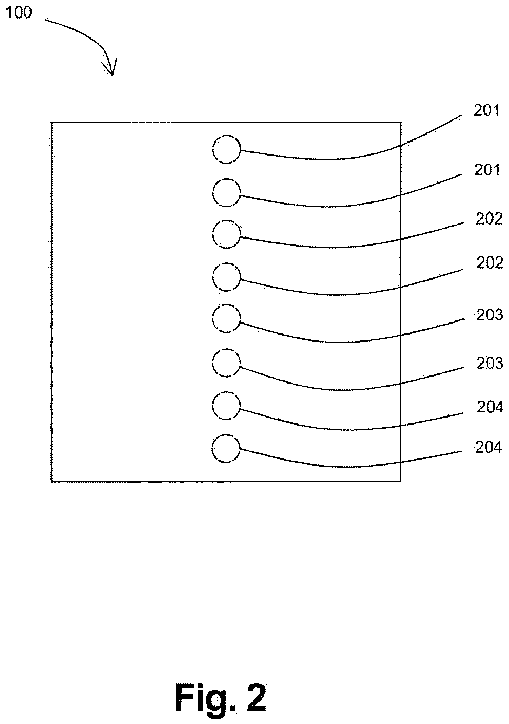

Referring to Figs. 1 and 2, the light-transmitting leather 100 is provided with multiple light transmission holes 200 which run through the second face 12 but do not run through the first face 11. The multiple light transmission holes 200 comprise two first light transmission holes 201, two second light transmission holes 202, two third light transmission holes 203 and two fourth light transmission holes 204. The distance D1 from the first light transmission holes 201 to the first face 11, the distance D2 from the second light transmission holes 202 to the first face 11, the distance D3 from the third light transmission holes 203 to the first face 11 and the distance D4 from the fourth light transmission holes 204 to the first face 11 are all unequal. D1, D2, D3 and D4 may also be called residual thicknesses. With this configuration, when a light source is positioned at the second face 12 side, the intensities of light rays passing through the first light transmission holes 201, the second light transmission holes 202, the third light transmission holes 203 and the fourth light transmission holes 204 from the light source are different. This makes it possible to achieve an effect whereby, when the light source is off, the light transmission holes 200 cannot be seen from the paint layer 2 side, i.e. the light transmission holes 200 will not affect the appearance of the product, but when the light source is switched on, the light source can pass through the first light transmission holes 201, the second light transmission holes 202, the third light transmission holes 203 and the fourth light transmission holes 204, and the intensities of the light rays passing through are different. This makes it possible not only to guarantee the appearance of the product when the light is off but also to obtain light rays of two or more different intensities by means of a single light source, so as to achieve a gradually changing light transmission effect. In this embodiment, the two first light transmission holes 201, the two second light transmission holes 202, the two third light transmission holes 203 and the two fourth light transmission holes 204 are all respectively arranged adjacently; one of the two second light transmission holes 202 is disposed adjacent to one of the two first light transmission holes 201, the other of the two second light transmission holes is disposed adjacent to one of the two third light transmission holes 203, and the other of the two third light transmission holes 203 is disposed adjacent to one of the two fourth light transmission holes 204. The two first light transmission holes 201, the two second light transmission holes 202, the two third light transmission holes 203 and the two fourth light transmission holes 204 are sequentially arranged in a row in the shape of the letter "I". Those skilled in the art will understand that in the present invention, the multiple light transmission holes 200 comprise at least one said first light transmission hole 201 and at least one said second light transmission hole 202. That is to say, the choice can be made to provide or not provide the third light transmission hole 203 and the fourth light transmission hole 204 depending on actual needs, and more light transmission holes at unequal distances from the first face 11 may be provided as required. Those skilled in the art will also understand that in other embodiments, the numbers of the first light transmission hole 201, the second light transmission hole 202, the third light transmission hole 203, the fourth light transmission hole 204 and more light transmission holes (if present) at unequal distances from the first face 11, and the manner in which they are arranged, may also be determined according to particular needs. Through different manners of arrangement, the multiple light transmission holes 200 may be arranged in specific patterns. Those skilled in the art will also understand that if it is desired to achieve a very good gradual change effect, it will be necessary to provide multiple said light transmission holes 200 with different residual thicknesses, and arrange them in a suitable manner.

Referring to Fig. 1, the skin layer 1 is a TPO elastomer skin layer, or a PVC skin layer, or a PU skin layer, or real leather. The visible light transmittance of the skin layer 1 is 3 - 10%, preferably 5 - 7%; the distances D1, D2, D3 and D4 from the first light transmission hole 201, the second light transmission hole 202, the third light transmission hole 203 and the fourth light transmission hole 204 to the first face 11 are all 0.05 - 0.2 mm, preferably 0.1 - 0.15 mm. Regarding the visible light transmittance, if the visible light transmittance is too large, it will not be possible to conceal an object such as the light source behind the skin layer 1, but if the visible light transmittance is too small, it will be necessary to set the residual thickness to a very small value in order to allow visible light to pass through, so it will be difficult to form the light transmission holes 200 with different thicknesses, and a very thin residual thickness is not favourable for concealing the object behind the skin layer 1. Regarding the residual thickness, if the residual thickness is too large, light scattering and refraction will be severe, affecting the light transmission effect, but if the residual thickness is too small, the light transmission holes 200 will be visible from the paint layer 2 side when the light is off, and this is not favourable for guaranteeing the appearance of the product when the light is off. In actual applications, those skilled in the art will need to select the skin layer 1 with suitable visible light transmittance and suitable residual thickness within the abovementioned ranges according to actual needs. When the skin layer 1 is a TPO elastomer skin layer, the light transmission holes 200 may be formed by laser drilling, preferably by carbon dioxide laser drilling. For better drilling, the infrared transmittance of the skin layer 1 is 0.5 - 6%, more preferably 0.5 - 2%. If the infrared transmittance of the skin layer 1 selected is too high, there will be considerable fluctuation in the infrared transmittance of the skin layer from batch to batch and also within batches, making it difficult to accurately control the residual thickness of the skin layer corresponding to each light transmission hole 200, and thus making it difficult to guarantee the anticipated gradual change effect. If the infrared transmittance of the skin layer 1 selected is too low, a laser will only be able to drill a hole, i.e. laser drilling will only be achievable if the residual thickness of the skin layer 1 is set to a small value, thus making it difficult to form light transmission holes 200 with different thicknesses.

Continuing to refer to Fig. 1, the choice can be made to provide or not provide the support layer 3 according to actual needs, and the support layer 3 may be a foamed layer or a base fabric layer or a framework layer; when the support layer 3 is provided, the light transmission holes 200 run through the support layer 3.

It will be understood that in the absence of conflict, the above examples of the present invention may be combined with each other to obtain further examples within the scope of the claims. The various specific technical features described in the particular embodiments above may, in the absence of contradiction, be combined in any suitable manner within the scope of the claims.

In the description of the present invention, it must be understood that directional or positional relationships indicated by the terms "center", "upper", "lower", "vertical", "horizontal", "top", "bottom", "inner", "outer", "clockwise" and "anticlockwise", etc. are based on directional or positional relationships shown in the drawings, and are merely intended to facilitate description of the present invention and simplify description; they do not indicate or imply that the apparatus or element referred to must have a specific direction and be constructed and operated in a specific direction, and therefore cannot be interpreted as restrictions on the present utility model. In addition, the terms "first" and "second" are merely used for descriptive purposes, and cannot be interpreted as indicating or implying relative importance or implicitly specifying the quantity of the technical feature indicated. Thus, a feature for which "first" and "second" are defined may explicitly or implicitly include one or more of the feature. In the description of the present utility model, the meaning of "multiple" is two or more, unless otherwise clearly and specifically defined.

In the present invention, unless otherwise clearly specified and defined, terms such as "mounted", "connected together", "connected" and "fixed", etc. should be interpreted in a broad sense, e.g. they may indicate a fixed connection, or a removable connection, or an integral connection; they may indicate a mechanical connection, or an electrical connection; they may indicate a direct connection, or an indirect connection via an intermediate medium, or internal communication between two elements. Those skilled in the art can interpret the specific meaning of the abovementioned terms in the present invention according to particular circumstances.

## Claims

1. A light-transmitting leather (100), comprising a skin layer (1) and a paint layer (2), the skin layer (1) comprising a first face (11) facing the paint layer (2) and a second face (12) facing away from the paint layer (2), wherein the light-transmitting leather (100) is provided with multiple light transmission holes (200) which run through the second face (12) but do not run through the first face (11), the multiple light transmission holes (200) comprise at least one first light transmission hole (201) and at least one second light transmission hole (202), and the distance from the first light transmission hole (201) to the first face (11) is not equal to the distance from the second light transmission hole (202) to the first face (11), the first light transmission hole (201) and the second light transmission hole (202) are arranged adjacently **characterized in that** the visible light transmittance of the skin layer (1) is 3 - 10%, and the distances from the first light transmission hole (201) and the second light transmission hole (202) to the first face (11) are both 0.05 - 0.2 mm.

2. The light-transmitting leather (100) as claimed in claim 1, wherein the skin layer (1) is a thermoplastic polyolefin elastomer skin layer, or a polyvinyl chloride skin layer, or a polyurethane skin layer, or real leather.

3. The light-transmitting leather (100) as claimed in claim 1, wherein the skin layer (1) is a thermoplastic polyolefin elastomer skin layer, and the light transmission holes (200) are formed by laser drilling.

4. The light-transmitting leather (100) as claimed in claim 3, wherein the light transmission holes (200) are formed by carbon dioxide laser drilling.

5. The light-transmitting leather (100) as claimed in claim 4, wherein the infrared transmittance of the skin layer (1) is 0.5 - 6%.

6. The light-transmitting leather (100) as claimed in claim 5, wherein the infrared transmittance of the skin layer (1) is 0.5 - 2%.

7. The light-transmitting leather (100) as claimed in claim 1, wherein the visible light transmittance of the skin layer (1) is 5 - 7%, and the distances from the first light transmission hole (201) and the second light transmission hole (202) to the first face (11) are both 0.1 - 0.15 mm.

8. The light-transmitting leather (100) as claimed in claim 1, wherein the multiple light transmission holes (200) are arranged in a specific pattern.

9. The light-transmitting leather (100) as claimed in claim 1, wherein the light-transmitting leather (100) comprises a foamed layer or a base fabric layer or a framework layer connected to the skin layer (1) at the second face (12), and the light transmission holes (200) run through the foamed layer or the base fabric layer or the framework layer.

10. The light-transmitting leather (100) as claimed in claim 7, wherein the skin layer (1) is a thermoplastic polyolefin elastomer skin layer with an infrared transmittance of 0.5 - 2%.

11. The light-transmitting leather (100) as claimed in claim 8, wherein the visible light transmittance of the skin layer (1) is 3 - 10%, and the distances from the first light transmission hole (201) and the second light transmission hole (202) to the first face (11) are both 0.05 - 0.2 mm.

## Patentansprüche

1. Lichtdurchlässiges Leder (100), das eine Hautschicht (1) und eine Lackschicht (2) aufweist, wobei die Hautschicht (1) eine erste Seite (11), die der Lackschicht (2) zugewandt ist, und eine zweite Seite (12), die der Lackschicht (2) abgewandt ist, aufweist, wobei das lichtdurchlässige Leder (100) mit zahlreichen Lichtdurchlasslöchern (200) versehen ist, die durch die zweite Seite (12) hindurch verlaufen, aber nicht durch die erste Seite (11) hindurch verlaufen, die zahlreichen Lichtdurchlasslöcher (200) wenigstens ein erstes Lichtdurchlassloch (201) und wenigstens ein zweites Lichtdurchlassloch (202) aufweisen und der Abstand von dem ersten Lichtdurchlassloch (201) zu der ersten Seite (11) nicht gleich dem Abstand von dem zweiten Lichtdurchlassloch (202) zu der ersten Seite (11) ist, das erste Lichtdurchlassloch (201) und das zweite Lichtdurchlassloch (202) benachbart angeordnet sind, **dadurch gekennzeichnet, dass** der Transmissionsgrad der Hautschicht (1) für sichtbares Licht 3 - 10 % beträgt und die Abstände von dem ersten Lichtdurchlassloch (201) und dem zweiten Lichtdurchlassloch (202) zu der ersten Seite (11) beide 0,05 - 0,2 mm betragen.

2. Lichtdurchlässiges Leder (100) nach Anspruch 1, wobei die Hautschicht (1) eine Hautschicht aus thermoplastischem Polyolefin-Elastomer oder eine Hautschicht aus Polyvinylchlorid oder eine Hautschicht aus Polyurethan oder echtes Leder ist.

3. Lichtdurchlässiges Leder (100) nach Anspruch 1, wobei die Hautschicht (1) eine Hautschicht aus thermoplastischem Polyolefin-Elastomer ist und die Lichtdurchlasslöcher (200) durch Laserbohren ausgebildet sind.

4. Lichtdurchlässiges Leder (100) nach Anspruch 3, wobei die Lichtdurchlasslöcher (200) durch Kohlendioxidlaserbohren ausgebildet sind.

5. Lichtdurchlässiges Leder (100) nach Anspruch 4, wobei der Infrarot-Transmissionsgrad der Hautschicht (1) 0,5 - 6 % beträgt.

6. Lichtdurchlässiges Leder (100) nach Anspruch 5, wobei der Infrarot-Transmissionsgrad der Hautschicht (1) 0,5 - 2 % beträgt.

7. Lichtdurchlässiges Leder (100) nach Anspruch 1, wobei der Transmissionsgrad der Hautschicht (1) für sichtbares Licht 5 - 7 % beträgt und die Abstände von dem ersten Lichtdurchlassloch (201) und dem zweiten Lichtdurchlassloch (202) zu der ersten Seite (11) beide 0,1 - 0,15 mm betragen.

8. Lichtdurchlässiges Leder (100) nach Anspruch 1, wobei die zahlreichen Lichtdurchlasslöcher (200) in einem bestimmten Muster angeordnet sind.

9. Lichtdurchlässiges Leder (100) nach Anspruch 1, wobei das lichtdurchlässige Leder (100) eine Schaumschicht oder eine Grundgewebeschicht oder eine Gerüstschicht, die an der zweiten Seite (12) mit der Hautschicht (1) verbunden ist, aufweist und die Lichtdurchlasslöcher (200) durch die Schaumschicht oder die Grundgewebeschicht oder die Gerüstschicht hindurch verlaufen.

10. Lichtdurchlässiges Leder (100) nach Anspruch 7, wobei die Hautschicht (1) eine Hautschicht aus thermoplastischem Polyolefin-Elastomer mit einem Infrarot-Transmissionsgrad von 0,5 - 2 % ist.

11. Lichtdurchlässiges Leder (100) nach Anspruch 8, wobei der Transmissionsgrad der Hautschicht (1) für sichtbares Licht 3 - 10 % beträgt und die Abstände von dem ersten Lichtdurchlassloch (201) und dem zweiten Lichtdurchlassloch (202) zu der ersten Seite (11) beide 0,05 - 0,2 mm betragen.

## Revendications

1. Matériau en cuir transmettant la lumière (100), comprenant une couche de peau (1) et une couche de peinture (2), la couche de peau (1) comprenant une première face (11) orientée vers la couche de peinture (2) et une seconde face (12) orientée à l'opposé de la couche de peinture (2), le matériau en cuir transmettant la lumière (100) étant pourvu de multiples trous de transmission de la lumière (200) qui traversent la seconde face (12) mais ne traversent pas la première face (11), les multiples trous de transmission de la lumière (200) comprenant au moins un premier trou de transmission de la lumière (201) et au moins un deuxième trou de transmission de la lumière (202), et la distance entre le premier trou de transmission de la lumière (201) et la première face (11) n'étant pas égale à la distance entre le deuxième trou de transmission de la lumière (202) et la première face (11),
le premier trou de transmission de la lumière (201) et le deuxième trou de transmission de la lumière (202) étant agencés de manière adjacente, **caractérisé en ce que** la transmittance de lumière visible de la couche de peau (1) est de 3 à 10 %, et **en ce que** les distances du premier trou de transmission de la lumière (201) et du deuxième trou de transmission de la lumière (202) à la première face (11) sont toutes deux de 0,05 à 0,2 mm.

2. Matériau en cuir transmettant la lumière (100) selon la revendication 1, la couche de peau (1) étant une couche de peau en élastomère de polyoléfine thermoplastique, ou une couche de peau en chlorure de polyvinyle, ou une couche de peau en polyuréthane, ou du cuir véritable.

3. Matériau en cuir transmettant la lumière (100) selon la revendication 1, la couche de peau (1) étant une couche de peau en élastomère de polyoléfine thermoplastique, et les trous de transmission de la lumière (200) étant formés par perçage au laser.

4. Matériau en cuir transmettant la lumière (100) selon la revendication 3, les trous de transmission de la lumière (200) étant formés par perçage au laser au dioxyde de carbone.

5. Matériau en cuir transmettant la lumière (100) selon la revendication 4, la transmittance infrarouge de la couche de peau (1) étant de 0,5 à 6 %.

6. Matériau en cuir transmettant la lumière (100) selon la revendication 5, la transmittance infrarouge de la couche de peau (1) étant de 0,5 à 2 %.

7. Matériau en cuir transmettant la lumière (100) selon la revendication 1, la transmittance de lumière visible de la couche de peau (1) étant de 5 à 7 %, et les distances du premier trou de transmission de la lumière (201) et du deuxième trou de transmission de la lumière (202) à la première face (11) étant toutes deux de 0,1 à 0,15 mm.

8. Matériau en cuir transmettant la lumière (100) selon la revendication 1, les multiples trous de transmission de la lumière (200) étant agencés selon un motif spécifique.

9. Matériau en cuir transmettant la lumière (100) selon la revendication 1, le matériau en cuir transmettant la lumière (100) comprenant une couche de mousse ou une couche de tissu de base ou une couche d'armature reliée à la couche de peau (1) sur la deuxième face (12), et les trous de transmission de la lumière (200) traversant la couche de mousse ou la couche de tissu de base ou la couche d'armature.

10. Matériau en cuir transmettant la lumière (100) selon la revendication 7, la couche de peau (1) étant une couche de peau en élastomère de polyoléfine thermoplastique avec une transmittance infrarouge de 0,5 à 2 %.

11. Matériau en cuir transmettant la lumière (100) selon la revendication 8, la transmittance de lumière visible de la couche de peau (1) étant de 3 à 10 %, et les distances du premier trou de transmission de la lumière (201) et du deuxième trou de transmission de la lumière (202) à la première face (11) étant toutes deux de 0,05 à 0,2 mm.
